# EUROPÄISCHE PATENTSCHRIFT

(11) **EP 1 964 716 B1**
(45) Veröffentlichungstag und Bekanntmachung des Hinweises auf die Patenterteilung: **07.10.2009**
(21) Anmeldenummer: 07004061.3
(22) Anmeldetag: 27.02.2007
(51) Int. Cl.: B60P 3/04

(54) **Fahrzeuganhänger mit speziellem Lüftungssystem**
Vehicle trailer with a special ventilation system
Remorque de véhicule doté d'un système de ventilation spécial

(43) Veröffentlichungstag der Anmeldung: 03.09.2008
(73) Patentinhaber: Westfalia Trailer Systems GmbH, 04720 Grossweitzschen OT Obergoseln (DE)
(72) Erfinder: Sperling, Matthias, 01662 Meissen (DE); Koglin, Klaus, 48231 Warendorf (DE)
(74) Vertreter: Kramer - Barske - Schmidtchen

(56) Entgegenhaltungen:
- GB-A- 356 644
- GB-A- 364 977
- SE-C2- 501 658

## Beschreibung

### TECHNISCHES GEBIET

Die vorliegende Erfindung betrifft einen Fahrzeuganhänger mit einem neuartigen Belüftungssystem. Fahrzeuganhänger der gattungsgemäßen Art umfassen einen geschlossenen Anhängeraufbau mit durch das Belüftungssystem zu belüftendem Innenraum. Der Anhängeraufbau umfasst einen während der Fahrt durch den Fahrtwind angeströmten Bugbereich und einen Heckbereich. Das neuartige Belüftungssystem ist im Bereich des Bugbereichs angeordnet.

### HINTERGRUND DER ERFINDUNG

Fahrzeuganhänger der eingangs genannten Art mit geschlossenem Anhängeraufbau werden beispielsweise zum Transport von Pferden oder anderen Tieren eingesetzt. Damit sich die in dem Innenraum des geschossenen Anhängeraufbaus befindenden Tiere während des Transports ausreichend mit Frischluft versorgt werden, ist es notwendig, den Innenraum zu belüften. Zum einen muss das Belüftungssystem gewährleisten, dass auch im Stand, d.h. wenn der Fahrzeuganhänger abgestellt ist bzw. nicht fährt, Frischluft in ausreichender Menge in den Innenraum gelangen kann. Zum anderen muss auch während der Fahrt die Frischluftzuführung gewährleistet sein. Dabei besteht oftmals das Problem, dass die Belüftung kostengünstig und einfach sein soll und zudem kein Wasser in den Innenraum gelangen darf. Insbesondere bei Regen soll in den Innenraum einströmende Frischluft kein Regenwasser enthalten. Außerdem soll keine ungünstige starke Frischluftströmung auftreten, wodurch insbesondere Tiere in ihrem Wohlbefinden beeinträchtigt werden könnten. Darüber hinaus ist es heutzutage oftmals gewünscht, dass Fahrzeuganhänger der eingangs genannten Art sehr strömungsgünstig sind, und entsprechende Frischluftzuführungsöffnungen oftmals das strömungsgünstige Äußere des Fahrzeuganhängers beinträchtigen.

Ein Lüftungssystem zum Belüften eines zu belüftenden Innenraums eines Tiertransportfahrzeugs ist beispielsweise aus der GB 364 977 A bzw. GB 364 644 A bekannt. Die Belüftung des Innenraums erfolgt hier durch eine an der Dachkante des Fahrzeugs angeordnete, nach unten gerichtete Einlassöffnung mit einem schräg aufwärts nach hinten verlaufenden Lüftungskanal, der einen thermostatgesteuerten Öffnungsmechanismus zur Belüftung des Innenraums aufweist.

Des Weiteren ist ein Anhäuger mit einer nach unten gerichteten Einlassöffnung, die in einem Bugbereich des Anhängers angeordnet ist, aus der SE 501 658 C2 bekannt.

Das der Erfindung zugrundeliegende technische Problem besteht somit darin, einen Fahrzeuganhänger der eingangs genannten Art mit einem Belüftungssystem auszustatten, das die obigen Nachteile nicht mehr oder nur noch in geringerem Maß aufweist. Insbesondere soll das Belüftungssystem strömungsgünstig bei geringen Herstellungskosten im Anhängeraufbau integriert werden können.

### DARSTELLUNG DER ERFINDUNG

Das der Erfindung zugrundeliegende technische Problem wird durch einen Fahrzeuganhänger gelöst, der einen geschlossenen Anhängeraufbau mit zu belüftendem Innenraum aufweist. Der Anhängeraufbau dieses Fahrzeuganhängers umfasst einen während der Fahrt durch den Fahrtwind angeströmten Bugbereich sowie einen Heckbereich. Ein Belüftungssystem besitzt wenigstens eine im durch den Fahrtwind angeströmten Bugbereich liegende Einströmöffnung und einen hinter der Einströmöffnung angeordneten, mit der Einströmöffnung in Strömungsverbindung stehenden Sammelbehälter. Der Sammelbehälter bildet einen Kanal, der von der Einströmöffnung nach oben hin bis über eine vorgegebene Minimalhöhe ansteigt. Der Kanal besitzt im oberhalb der vorgegebenen Minimalhöhe liegenden Bereich des oberen Kanalendes mindestens eine Ausströmöffnung, die eine Strömungsverbindung zum Innenraum des Anhängeraufbaus hat. Der Fahrzeuganhänger enthält mindestens eine Fellsteröffnung, die in dem durch den Fahrtwind angeströmten Bereich angeordnet ist. Diese Fensteröffnung ist durch eine Fensterscheibe verschlossen. Entweder ist die mindestens eine Einströmöffnung durch einen Schlitz zwischen dem Rand der Fensterscheibe und der Außenfläche des Bugbereichs oder durch mindestens einen in der Fensterscheibe vorhandenen Durchbruch gebildet.

Durch den erfindungsgemäßen Aufbau ist es erstmals möglich, ein Belüftungssystem in einfacher, aber äußerst zweckmäßiger und einfacher Weise in dem direkt durch den Fahrtwind angeströmten Bugbereich vorzusehen. Die wenigstens eine Einströmöffnung schafft in Verbindung mit dem Sammelbehälter eine strömungsgünstige, den C_{w}-Wert im Wesentlichen nicht verändernde Außenfläche, die aber das Einströmen von Frischluft in den Sammelbehälter erlaubt. Durch den ansteigenden Sammelkanal des Sammelbehälters wird auch bei der höchstzulässigen Fahrtgeschwindigkeit sichergestellt, dass mit der in den Sammelbehälter bzw. den hierdurch gebildeten Sammelkanal zusammen mit der Frischluft einströmendes Wasser, z.B. Spritz- oder Regenwasser nicht in den Innenraum gelangt, sondern sich in dem ansteigenden Sammelkanal sammelt und dann aus diesem wieder herausfließt. Aufgrund der direkten Anströmung sind nur schmale oder kleinere Einströmöffnungen zur ausreichenden Zuführung von Frischluft notwendig, so dass gleichzeitig im Querschnitt gesehen die strömungsgünstige Außenfläche des Bugbereichs des Fahrzeuganhängeraufbaus so gut wie nicht beeinträchtigt ist. Eindringendes Wasser steigt im Sammelkanal bis maximal zur vorgegebenen Mindesthöhe an und durch Verwirbelungen und die Schwerkraft wird dieses Wasser dann wieder nach unten im Sammelbehälter abfließen und an dessen äußeren Rand auf die Außenfläche des Aufbaus ausströmen. Dadurch dass erst oberhalb der vorgegebenen Mindesthöhe, am oberen Kanalende des Sammelbehälters eine Ausströmöffnung vorhanden ist, die dann die Strömungsverbindung zum Innenraum des Anhängeraufbaus schafft, wird vermieden, dass Wasser in den Innenraum gelangt. Zudem wird sichergestellt, dass im Wesentlichen eine niedrige Einströmgeschwindigkeit der Frischluft in den Innenraum auf einfach Weise erzielbar ist.

Dadurch, dass die Einströmöffnung durch einen Schlitz zwischen einem Rand der Fensterscheibe und der Außenfläche des Bugbereichs gebildet ist, ist in einfacher und gleichzeitig ästhetischer Weise eine strömungsgünstige Öffnung für das Belüftungssystem in Kombination mit dem Fenster geschaffen. Die schlitzartig ausgebildete Einströmöffnung beeinträchtigt die strömungsgünstige Außenfläche des Bugbereichs nicht wesentlich. Gleichzeitig ist aber sichergestellt, dass eine ausreichende Frischlüftzuführung in den Sammelbehälter und damit über die Ausströmöffnung in den Innenraum des Fahrzeugaufbaus erfolgt. Außerdem wird durch die Umleitung nach oben und in Kombination mit der schlitzartigen oder spaltartigen Ausgestaltung der Einströmöffnung in Kombination mit der Fensterscheibe ein attraktives Erscheinungsbild erzielt.

Bei der alternativen Ausführungsform, bei der die mindestens eine Einströmöffnung durch mindestens einen in der Fensterscheibe vorhandenen Durchbruch gebildet ist kann zum einen noch das strömungsgünstige Äußere verbessert sein, gleichzeitig kann auch die "optische Integration" des Belüftungssystems weiter verbessert sein. Der mindestens eine Durchbruch kann als Schlitz oder Langloch ausgebildet sein. Es ist allerdings auch möglich, viele kleine Löcher vorzusehen.

Eine sehr strömungsgünstige Ausgestaltung einer beispielhaften Ausführungsform eines erfindungsgemäßen Fahrzeuganhängers ist dadurch gegeben, dass die Fensterscheibe mit der Außenfläche des Bugbereichs im Wesentlichen Plan ist.

Bei einer weiteren beispielhaften Ausführungsform der vorliegenden Erfindung mündet mindestens eine Ausströmöffnung direkt in den Innenraum. Durch diese Ausgestaltung wird insbesondere im Bereich des Kopfes eines Pferdes, das sich im Innenraum des Fahrzeuganhängeraufbaus befindet, Frischluft eingebracht.

Alternativ hierzu oder zusätzlich zu der vorherigen Ausgestaltung kann mindestens eine Ausströmöffnung sich auch in einer Kanalseitenwand befinden. Damit wird eine in einer Draufsicht auf den Fahrzeuganhänger gesehen seitliche Verteilung entlang der Seitenwände erzielt.

Eine bessere Verteilung in Richtung der Decke des Fahrzeugaufbaus im Innenraum wird erzielt, dass in einer beispielhaften Ausgestaltung des Fahrzeuganhängers gemäß der vorliegenden Erfindung eine Ausströmöffnung sich in einer oberen, den Kanal anschließenden Stirnwand befindet.

Gemäß einer weiteren beispielhaften Ausführungsform der vorliegenden Erfindung ist in der mindestens einen Ausströmöffnung eine Einstellklappe angeordnet, mit der die in den Innenraum strömende Frischluftmenge einstellbar ist. Insbesondere befindet sich eine derartige Einstellklappe in derjenigen Ausströmöffnung, die sich in der oberen, den Kanal abschließenden Stirnwand befindet.

Abschließend ist noch anzumerken, dass die zuvor beschriebene Permanentlüftung des Fahrzeuganhängers auch zumindest mit einem Kanal in eine Sattelkammer münden kann. Dadurch kann erreicht werden, dass z.B. feuchte Sättel oder Reiterkleidung besser belüftet und getrocknet wird. Außerdem wird bei stillstehendem Fahrzeuganhänger durch das Belüftungssystem gleichzeitig auch ein Entlüftungssystem geschaffen, durch das, wie zuvor beschrieben, z.B. in der Sattelkammer sich anreichernde Feuchtigkeit abgeführt werden kann.

### KURZE BESCHREIBUNG DER ZEICHNUNGEN

Im Folgenden sind zur weiteren Erläuterung und zum besseren Verständnis mehrere beispielhafte Ausführungsformen der vorliegenden Erfindung unter Bezugnahme auf die beigefügten Zeichnungen näher beschrieben. Es zeigt:
- Fig. 1: eine schematische Seitenansicht einer ersten Ausführungsform eines erfindungsgemäßen Fahrzeuganhängers zum Transport von Pferden,
- Fig. 2: eine Vorderansicht des in der Fig. 1 gezeigten erfindungsgemäßen Fahrzeuganhängers,
- Fig. 3: ein Detail "X" der in der Fig. 2 gezeigten Vorderansicht,
- Fig. 4: ein Detail "Y" in schematisierter Weise der in der Fig. 1 gezeigten Seitenansicht des erfindungsgemäßen Fahrzeuganhängers,
- Fig. 5: eine der Fig. 4 ähnliche schematisierte Querschnittsansicht des Details "Y", in der eine Modifikation der in der Fig. 4 gezeigten Ausführungsform eines erfindungsgemäßen Belüftungssystems gezeigt ist,
- Fig. 6: eine der Fig. 5 gleichende schematische Darstellung einer weiteren beispielhaften Ausführungsform eines Belüftungssystems für einen Fahrzeuganhänger,
- Fig. 7: eine den Ansichten der Fig. 4 bis 6 gleichende schematisierte Querschnittsansicht eines Details "Y" in weiterer modifizierter Ausführungsform, und
- Fig.8: eine Hinteransicht des in der Fig. 1 gezeigten Fahrzeuganhängers.

### AUSFÜHRLICHE BESCHREIBUNG VON BEISPIELHAFTEN AUSFÜHRUNGSFORMEN DER VOLIEGENDEN ERFINDUNG

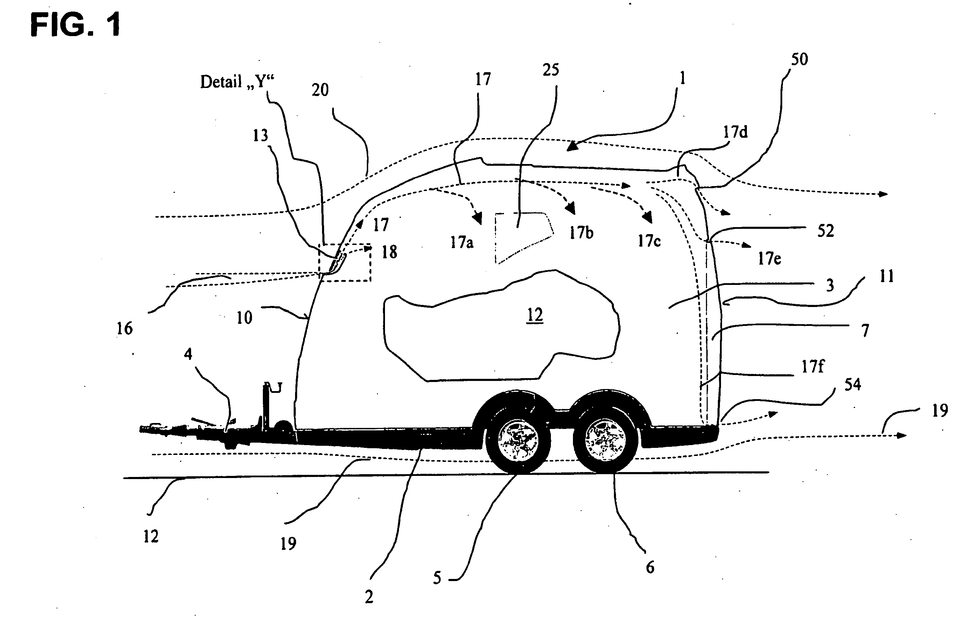

In der Fig. 1 ist in schematischer Seitenansicht eine erste beispielhafte Ausführungsform eines erfindungsgemäßen Fahrzeuganhängers 1 zum Transport von Pferden gezeigt. Der Fahrzeug- bzw. Pferdeanhänger 1 umfasst ein Fahrgestell 2 und einen Anhängeraufbau 3. Das Fahrgestell 2 wird über eine feste Zuganhängeeinrichtung 4 an eine hier nicht gezeigte Anhängerkupplung eines Fahrzeugs angehängt. Das Fahrgestell 2 besitzt in der vorliegenden beispielhaften Ausführungsform eine Tandemachse mit Rädern 5, 6.

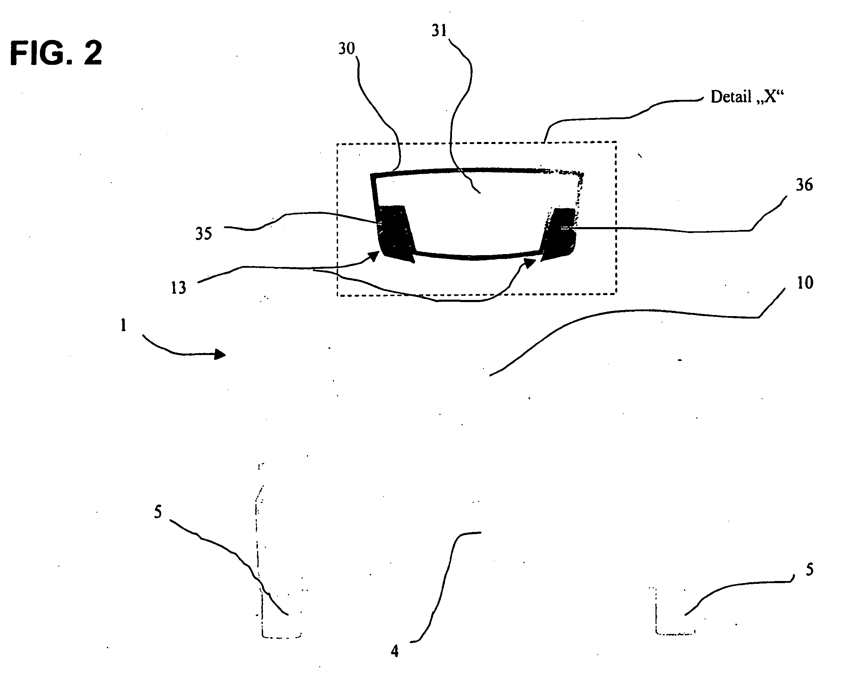

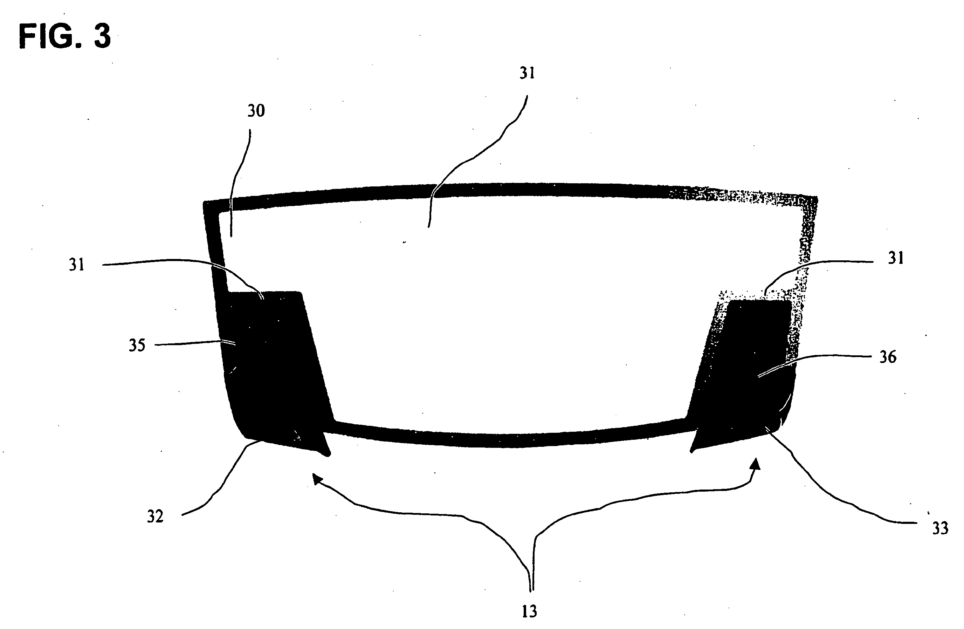

Der Aufbau 3 besitzt einen Bugbereich 10 und einen Heckbereich 11. Im Innenraum 12 des Aufbaus 3 können im vorliegenden Ausführungsbeispiel zwei Pferde untergebracht und transportiert werden. Im Bugbereich 10 befindet sich, was später noch anhand der Fig. 2 und 3 genauer erläutert wird, ein Fenster 30 mit einem Belüftungssystem 13. In dieser Seitenansicht ist zudem ein Seitenfenster 25 angedeutet.

Im Heckbereich 11 des Aufbaus 3 ist eine Heckklappe 7 so angeordnet, dass sie über eine hier nicht gezeigte Schwenklagerung nach außen verschwenkt und auf dem Boden 12 abgelegt werden kann. Im oberen Bereich des Heckbereichs 11 befinden sich Öffnungen 50, 52 über die, wie später noch genauer erläutert wird, eine Entlüftung des Innenraums 12 erfolgt. Diesbezüglich ist noch anzumerken, dass eine Entlüftung auch über einen im unteren Bereich der Heckklappe 8 befindlichen quer verlaufenden Spalt 54 eine Entlüftung erfolgen kann.

Wie bereits aus der schematischen Seitenansicht gemäß der Fig. 1 ersichtlich ist, weist der erfindungsgemäße Fahrzeuganhänger 1 eine strömungsgünstige Form auf. So wird während der Fahrt der Fahrtwind zum einen den Fahrzeuganhänger 1 oberhalb des Aufbaus 3 umströmen, wie es mit dem Bezugszeichen 20 angedeutet ist. Unterhalb des Fahrgestells 2 des Fahrzeuganhängers 1 wird ebenfalls der Fahrtwind durchstreichen, wie es mit dem Bezugszeichen 19 angedeutet ist. Im Bereich des Bugs 10 des Fahrzeugaufbaus 3 wird im Bereich des Fensters 30, wie es insbesondere in der Fig. 2 gezeigt ist, eine Luftströmung 16 auftreffen. Diese Lüftströmung 16 wird dann in eine Lüftströmung 17 und 18 aufgeteilt. Die Lüftströmung 17 wird sich dann im Inneren 12 gemäß den Pfeilen 17a - 17f verteilen. Über die genannten Entlüftungen 50, 52, 54 werden dann die Luftströmungen 17d, 17e und 17f aus dem Innenraum 12 des Aufbaus 3 ausströmen.

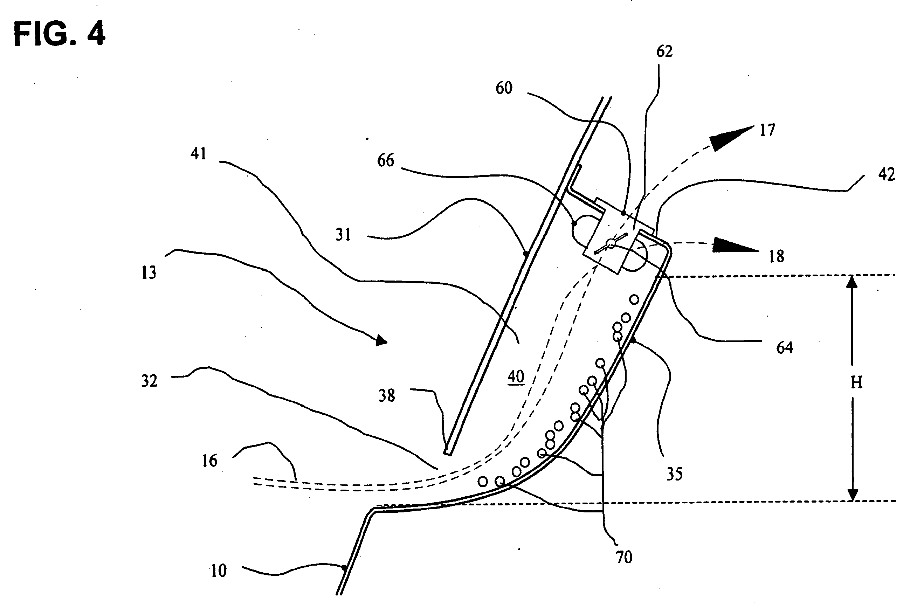

Im Folgenden wird nun anhand der Fig. 2 bis 4 der Aufbau des neuartigen Belüftungssystems 13 näher erläutert. Wie in den Fig. 2 und 3 ersichtlich ist, ist im oberen Bugbereich 10 des Aufbaus 3 eine Fensteröffnung 30 vorhanden, die über eine Fensterscheibe 31 verschlossen ist. In der rechten und linken unteren Ecke 31a, b der Fensteröffnung 30 befinden sich Einströmöffnungen 32, 33, die jeweils in zugehörige Sammelbehälter 35, 36 münden. Wie insbesondere aus der Darstellung der Fig. 3 und 4 ersichtlich ist, werden in dem hierin gezeigten Ausführungsbeispiel die Einströmöffnungen 32, 33 dadurch gebildet, dass die Fensterscheibe 31 an ihrem unteren Rand 38 einen Spalt 32 zu dem in der jeweiligen Ecke 31a, 31b dahinterliegenden Sammelbehälter 35, 36 bildet. Wie insbesondere aus den Fig. 1 und 4 ersichtlich ist, liegt ansonsten die Fensterscheibe 31 im Wesentlichen plan zu der Außenfläche des Bugbereichs 10 des Aufbaus 3. Im vorliegenden Fall steht der Sammelbehälter 35 gegenüber dem unteren Rand 38 der Fensterscheibe 31 etwas vor. Dies können beispielsweise ungefähr 5- 50 mm, insbesondere ca. 10-40 mm und weiter insbesondere ca. 30-35 mm sein. Der in der Fig. 4 gezeigte Spalt 32 ist in dieser Querschnittsansicht vorzugsweise ca. 5- 50 mm, insbesondere ca. 10-40 mm und weiter insbesondere ca. 30-35 mm hoch. Bei einer beispielhaften Ausführungsform beträgt die Spalthöhe ca. 35 mm.

Aufgrund der Tatsache, dass die in der Fig. 3 gezeigten Einströmöffnungen 32, 33 mit zugehörigen Bauteilen in der rechten und linken unteren Ecke 31a, b der Fensterscheibe 31 gleich aufgebaut sind, wird im Folgenden nun noch Bezug genommen auf die in der Fig. 4 gezeigte schematische Querschnittsansicht der in der Fig. 3 gezeigten linken Einströmöffnung 32.

Die linke Einströmöffnung 32 wird, wie bereits zuvor erläutert, durch den freien Rand 38 der Fensterscheibe 31 und dem etwas überstehenden unteren Endbereich des Sammelbehälters 35 gebildet. Der Sammelbehälter 35 formt mit Seitenwänden 41 und in Kombination mit der Fensterscheibe 31 einen Kanal 40, der sich nach oben hin bis über eine gewisse Höhe H erstreckt. Oberhalb dieser Mindesthöhe H verläuft eine Stirnwand 42, die grundsätzlich den Kanal 40 nach oben hin verschließt und auch mit der Fensterscheibe 31 dicht abschließt. Die Mindesthöhe H ist dabei so gewählt, dass mit der Luftströmung 16 in den Sammelkanal 40 einströmendes Wasser 70 auch bei maximaler Fahrgeschwindigkeit nur bis zur Mindesthöhe H hochgedrückt werden kann. Sie beträgt beispielsweise 5-20 cm, vorzugsweise ungefähr 10-15cm, insbesondere ca. 11 cm. Durch Verwirbelungen in dem Sammelkanal 40 wird sich allerdings das Wasser dann im Sammelkanal 40 sammeln und unter Bildung von Tropfen an dem Boden des Sammelbehälters 35 ablaufen. Durch die Mindesthöhe H ist gesichert, dass kein Wasser bis in den Innenraum 12 des Aufbaus 3 gelangen kann.

Die den Sammelkanal 40 abschließende Stirnwand 42 besitzt mindestens eine Durchgangsöffnung 62, in der in der vorliegenden Ausführungsform eine Regelklappe 60 angeordnet ist. Über die Regelklappe 60 kann die durch die Einströmöffnung 62 strömende Frischluft 17 reguliert werden. Die Klappe 60 ist dabei vom Innenraum 12 her über einen Einstellgriff 64 einstellbar. werden. Die Klappe 60 ist dabei vom Innenraum 12 her über einen Einstellgriff 64 einstellbar. An Seitenwänden 41 des Sammelkanals 40 sind zudem Durchgangsöffnungen 66 vorhanden, die direkt in den Innenraum 12 münden. Hier kann direkt Frischluft 18 in den Innenraum 12 strömen. Im vorliegenden Ausführungsbeispiel sind diese einströmenden Frischluftanteile 18 nicht einstellbar. Der Vorteil dieser Ausgestaltung besteht darin, dass immer gewährleistet ist, dass eine bestimmte Mindestfrischluftmenge 18 in den Innenraum 12 einströmt. Je nach Temperatur und Bedarf kann eine zusätzliche Frischluftmenge 17 über die jeweiligen Belüftungen 32, 33 in den Innenraum 12 eingebracht werden.

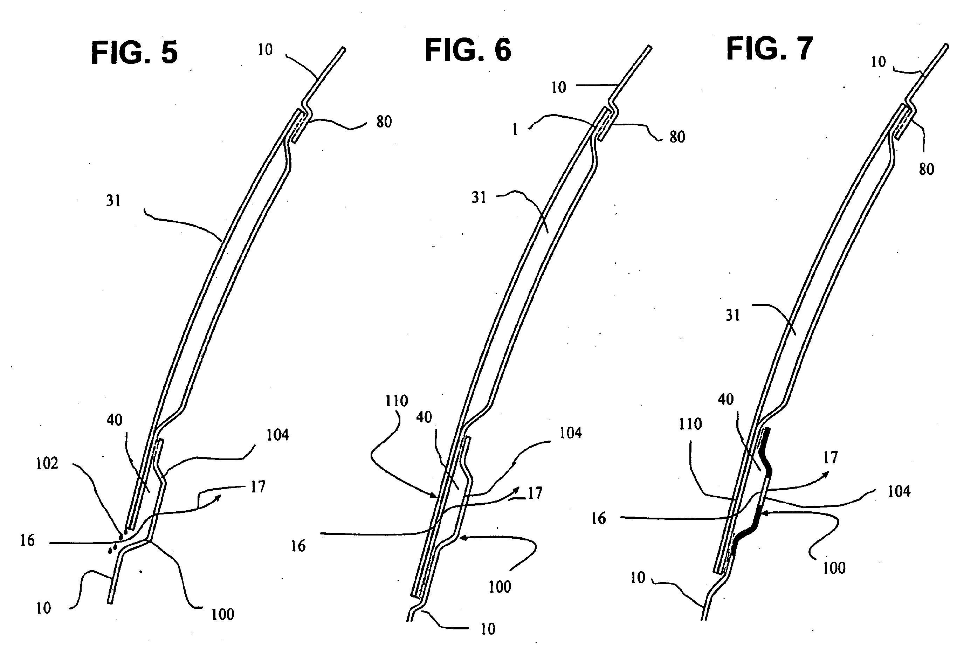

In der Fig. 5 ist eine der Fig. 4 ähnliche Querschnittsansicht einer modifizierten Ausführungsform der vorliegenden Erfindung gezeigt. Hier ist die Fensterscheibe 31 als Doppelscheibe ausgebildet und im Bugbereich 10 eingeklebt. Die Außenwandlung des Bugbereichs 10 ist hierfür im Bereich der Fensteröffnung 30 ringsherum mit einer Vertiefung 80 versehen, in der der Scheibenrand der Fensterscheibe 31 eingeklebt ist. Im unteren Randbereich 38 der Fensterscheibe 31 ist wiederum ein Sammelbehälter 100 angeordnet, der in Kombination mit der darüber liegenden Fensterscheibe 31 einen Spalt 102 bildet. Auf der ansteigenden Hinterseite des Sammelbehälters 100 ist eine Öffnung 104 vorhanden, die in Strömungsverbindung mit dem Innenraum 12 des Aufbaus 3 steht. Obwohl es hier nicht so dargestellt ist, ist bei dieser Ausführungsform gemäß der Fig. 5 auch eine Mindesthöhe H vorhanden, so dass kein Wasser in den Innenraum 12 gelangen kann.

Die Fig. 6 zeigt eine der Fig. 5 sehr ähnliche Querschnittsansicht. Hier ist allerdings die Scheibe 31 vollständig in die Vertiefung 80 im Bugbereich 10 des Fahrzeugaufbaus 3 eingeklebt. Anstatt das nunmehr ein Spalt 102 zwischen den Scheibenrand 38 und der Außenwandlung 10 gebildet ist, sind hier nun eine oder mehrere Durchbrüche 110 in der Fensterscheibe 31 selbst vorhanden, durch die Frischluft in den dahinter liegenden Sammelbehälter einströmt. Hier sind die Durchbrüche 110 und die Ausströmöffnung 104 im Querschnitt gesehen zueinender in der Höhe versetzt, so dass wie bei den anderen Ausführungsbeispielen kein Wasser in den Innenraum 12 des Fahrzeugaufbaus 3 gelangen kann. Bei dieser Ausgestaltung ist die vollständige plane Ausgestaltung des Bugbereichs 10 vorteilhaft, allerdings besteht eine gewisse Gefahr, dass sich Wasser im unteren Teil des Sammelbehälters 100 sammeln kann.

Eine weitere beispielhafte Ausführungsform der vorliegenden Erfindung ist in der Fig. 7 gezeigt. Diese entspricht im Wesentlichen der Fig. 6, allerdings ist hier der Sammelbehälter 100 als eigenständiges Teil ausgebildet, wohingegen in den Ausführungsformen gemäß den Fig. 5 und 6 der Sammelbehälter als Anformung der Außenwand des Fahrzeugaufbaus 3 ausgebildet ist.

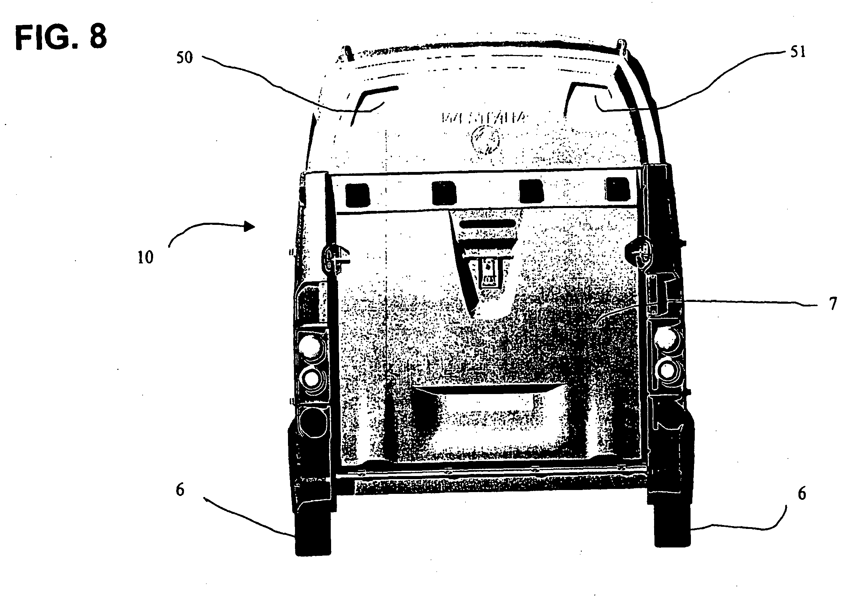

Schließlich zeigt die Rückansicht der Fig. 8 die Ausströmöffnungen 50, 51, die in der Fig. 1 lediglich angedeutet sind.

## Patentansprüche

1. Fahrzeuganhänger (1) mit:
- einem geschlossenen Anhängeraufbau (3) mit zu belüftendem Innenraum (12), wobei der Anhängeraufbau (3) einen während der Fahrt durch den Fahrtwind angeströmten Bug-(10) und einen Heckbereich (7) umfasst, und
- einem Belüftungssystem (13), das wenigstens eine im durch den Fahrtwind angeströmten Bugbereich (10) liegende Einströmöffnung (32, 33) und einen hinter der Einströmöffnung (32, 33) angeordneten, mit der Einströmöffnung (32, 33) in Strömungsverbindung stehenden Sammelbehälter (35, 36) aufweist,
wobei der Sammelbehälter (35, 36) einen Kanal (41) bildet, der von der Einströmöffnung (32, 33) nach oben hin bis über eine vorgegebene Minimalhöhe (H) ansteigt, und
wobei der Kanal (41) des Sammelbehälters (35, 36) im oberhalb der vorgegebenen Minimalbauhöhe (H) liegenden Bereich des oberen Kanalendes mindestens eine Ausströmöffnung (62, 66) besitzt, die eine Strömungsverbindung zum Innenraum (12) des Anhängeraufbaus (3) hat,
- mindestens einer Fensteröffnung (30), die in dem durch den Fahrtwind angeströmten Bugbereich (10) angeordnet ist und durch eine Fensterscheibe (31) verschlossen ist, wobei die mindestens eine Einströmöffnung (32, 33) durch einen Schlitz zwischen einem Rand (38) der Fensterscheibe (31) und der Außenfläche des Bugbereichs (10) oder durch mindestens einen in der Fensterscheihe (31) vorhandenen Durchbruch (110) gebildet ist.

2. Fahrzeuganhänger nach Anspruch 1, **dadurch gekennzeichnet, dass** zwei horizontal beabstandete, im Bereich der unteren Ecken der gleichen Fensterscheibe (31) angeordnete Einströmöffnungen (32, 33) als Schlitz zwischen dem Rand (38) der Fensterscheibe (31) und der Außenfläche des Bugbereichs (10) gebildet sind und jede Einströmöffnung (32, 33) einen eigenen Sammelbehälter (35, 36) umfasst.

3. Fahrzeuganhänger nach Anspruch 1 oder 2, **dadurch gekennzeichnet, dass** die Fensterscheibe (31) mit der Außenfläche des Bugbereichs (10) im Wesentlichen plan ist.

4. Fahrzeuganhänger nach einem der Ansprüche 1-3, **dadurch gekennzeichnet, dass** mindestens eine Ausströmöffnung (62, 66) direkt in den Innenraum (12) mündet.

5. Fahrzeuganhänger nach einem der Ansprüche 1-3, **dadurch gekennzeichnet, dass** mindestens eine Ausströmöffnung (66) sich in einer Kanalseitenwand (41) befindet.

6. Fahrzeuganhänger nach einem der voranstehenden Ansprüche, **dadurch gekennzeichnet, dass** mindestens eine Ausströmöffnung (60) sich in einer oberen, den Kanal abschließenden Stirnwand (42) befindet.

7. Fahrzeuganhänger nach Anspruch 6, **dadurch gekennzeichnet, dass** in mindestens einer der Ausströmöffnungen (60, 66), die sich in der oberen, den Kanal abschließenden Stirnwand (42) befindet, eine Einstellklappe (62) angeordnet ist, mit der die in den Innenraum (12) strömende Frischluftmenge einstellbar ist.

## Claims

1. A vehicle trailer (1) comprising:
- a closed trailer assembly (3) with an inner chamber (12) to be ventilated, wherein the trailer assembly (3) comprises a front area (10) blown by the airflow while driving, and a rear area (7), and
- a ventilation system (13) having at last one inlet opening (32, 33) positioned in the front area (10) which is blown by the airflow, and a reservoir (35, 36) being arranged behind the inlet opening (32, 33) and being in flow connection with the inlet opening (32, 33),
wherein the reservoir (35, 36) forms a channel (41) rising from the inlet opening (32, 33) upwardly over a preset minimum height (H), and
wherein the channel (41) of the reservoir (35, 36) comprises at least one outlet opening (62, 66) in the area located above the preset minimal height (H) of the upper end of the channel, the outlet opening (62, 66) being in flow connection to the inner chamber (12) of the trailer assembly (3),
- at least one window opening (30) positioned in the front area (10) which is blown by the airflow and that is closed by a window pane (31), wherein the at least one inlet opening (32, 33) is formed by a slit between an edge (38) of the window pane (31) and the outer surface of the front area (10) or by at least one aperture (110) provided in the window pane (31).

2. The vehicle trailer according to claim 1, **characterized in that** two inlet openings (32, 33) horizontally offset from each other in the area of the lower corners of the same window pane (31) are formed as a slit between the edge (3 8) of the window pane (31) and the outer surface of the front area (10), and that each inlet opening (32, 33) comprises its own reservoir (35, 36).

3. The vehicle trailer according to claim 1 or 2, **characterized in that** the window pane (31) is substantially planar with the outer surface of the front area (10).

4. The vehicle trailer according to any of the claims 1 to 3, **characterized in that** at least one outlet opening (62, 66) opens directly in the inner chamber (12).

5. The vehicle trailer according to any one of claims 1 to 3, **characterized in that** at least one outlet opening (66) is arranged in a side wall of the channel (41).

6. The vehicle trailer according to any one of the preceding claims, **characterized in that** at least one outlet opening (60) is arranged in an upper end wall (42) that closes the channel.

7. The vehicle trailer according to claim 6, **characterized in that** an regulating flap (62) is arranged in at least one of the outlet openings (60, 66), which are positioned in the upper end wall (42) that closes the channel, wherein the amount of fresh air that is flowing into the inner chamber (12) can be adjusted by the regulating flap (62).

## Revendications

1. Remorque de véhicule (1), comprenant :
- une superstructure de remorque fermée (3) avec un espace intérieur (12) à aérer, dans laquelle la superstructure de remorque (3) comprend une zone avant (10) recevant le vent pendant le déplacement et une zone arrière (7), et
- un système d'aération (13) qui présente au moins une ouverture d'entrée (32, 33) située dans la zone avant (10) recevant le vent et un récipient collecteur (35, 36) disposé derrière l'ouverture d'entrée (32, 33), en communication fluidique avec l'ouverture d'entrée (32, 33),
dans laquelle le récipient collecteur (35, 36) forme un canal (41) qui monte depuis l'ouverture d'entrée (32, 33) vers le haut jusqu'à une hauteur minimale (H) prédéfinie, et
dans laquelle le canal (41) du récipient collecteur (35, 36) possède dans la zone située au-dessus de la hauteur de construction minimale (H) prédéfinie de l'extrémité de canal supérieure au moins une ouverture de sortie (62, 66) qui présente une communication fluidique avec l'espace intérieur (12) de la superstructure de remorque (3),
- au moins une ouverture de fenêtre (30) qui est disposée dans la zone avant (10) recevant le vent et est fermée par une vitre (31), ladite au moins une ouverture d'entrée (32, 33) étant formée par une fente entre un bord (38) de la vitre (31) et la surface extérieure de la zone avant (10) ou par au moins un passage (110) existant dans la vitre (31).

2. Remorque de véhicule selon la revendication 1, **caractérisée en ce que** deux ouvertures d'entrée (32, 33), espacées horizontalement et disposées dans la zone des coins inférieurs de la même vitre (31) sont formées comme une fente entre le bord (38) de la vitre (31) et la surface extérieure de la zone avant (10) et chaque ouverture d'entrée (32, 33) comprend son propre récipient collecteur (35, 36).

3. Remorque de véhicule selon la revendication 1 ou 2, **caractérisée en ce que** la vitre (31) est substantiellement plane avec la surface extérieure de la zone avant (10).

4. Remorque de véhicule selon l'une quelconque des revendications 1 à 3, **caractérisée en ce que** ladite au moins une ouverture de sortie (62, 66) débouche directement sur l'espace intérieur (12).

5. Remorque de véhicule selon l'une quelconque des revendications 1 à 3, **caractérisée en ce que** ladite au moins une ouverture de sortie (66) se trouve dans une paroi latérale de canal (41).

6. Remorque de véhicule selon l'une quelconque des revendications précédentes, **caractérisée en ce qu'**au moins une ouverture de sortie (60) se trouve dans une paroi frontale (42) supérieure, terminant le canal.

7. Remorque de véhicule selon la revendication 6, **caractérisée en ce que** dans au moins l'une des ouvertures de sortie (60, 66), qui se trouve dans la paroi frontale (42) supérieure terminant le canal, un volet de réglage (62) est disposé qui permet de régler la quantité d'air frais pénétrant dans l'espace intérieur (12).
